# EUROPEAN PATENT APPLICATION

(11) **EP 4 586 065 A1**
(43) Date of publication of application: **16.07.2025**
(21) Application number: 23877587.8
(22) Date of filing: 04.10.2023
(51) Int. Cl.: G06F 3/04842, G06F 3/0481, H04M 1/72409, G06F 3/04817, G06F 12/0871, H04W 4/80, G06F 3/06, G06F 12/0891

(54) **ELECTRONIC DEVICE, METHOD, AND COMPUTER-READABLE STORAGE MEDIUM FOR DISPLAYING VISUAL OBJECT ON BASIS OF CONNECTED STATE WITH EXTERNAL ELECTRONIC DEVICE**

(30) Priority: 13.10.2022 KR 20220131478; 21.10.2022 KR 20220136907; 26.10.2022 KR 20220139766
(71) Applicant: Samsung Electronics Co., Ltd., Suwon-si, Gyeonggi-do 16677 (KR)
(72) Inventor: SO, Sanghun, Suwon-si Gyeonggi-do 16677 (KR); SHIN, Gyuhan, Suwon-si Gyeonggi-do 16677 (KR); KIM, Sangheon, Suwon-si Gyeonggi-do 16677 (KR); NAM, Seungwook, Suwon-si Gyeonggi-do 16677 (KR); CHOI, Jin, Suwon-si Gyeonggi-do 16677 (KR); LIM, Yeunwook, Suwon-si Gyeonggi-do 16677 (KR)
(74) Representative: Gulde & Partner
(86) International application number: PCT/KR2023/015270
(87) International publication number: WO 2024/080659

(57) **Abstract**

An electronic device according to an embodiment may obtain information indicating a connection state between the electronic device and at least one external electronic device, established by a communication circuit, according to a designated cycle. The processor of the electronic device may, on the basis of a first application being executed, identify a designated input indicating that at least one content displayed in a display is stored within a designated area of a memory accessed by a second application different from the first application. The processor may, on the basis of the input, in a first state in which the at least one external electronic device has been identified, store data representing the at least one content in the designated area, using the obtained information, and display, in the display, a first visual object representing the first state.

## Description

### [Technical Field]

Various embodiments relate to an electronic device, a method, and a computer-readable storage medium for displaying a visual object based on a status of being connected to an external electronic device.

### [Background Art]

Recently, various types of electronic devices such as a smartphone, a tablet personal computer (PC), an augmented reality (AR) device, a virtual reality (VR) device, and/or a smart watch have been widely distributed. An electronic device may establish a communication link using communication circuitry with various types of external electronic devices. The electronic device may provide a user notification for transmitting, to an external electronic device, information indicating at least one content stored in an area of memory. The electronic device may use a clipboard to store information indicating at least one content in an area of the memory. The clipboard is an example of an application used to store information during a specified time, when the information is transmitted between applications stored in the electronic device.

### [Disclosure]

### [Technical Solution]

According to an embodiment, an electronic device may comprise communication circuitry, a display, memory, and a processor. The processor may be configured to obtain information indicating a status of a connection, established by the communication circuitry, between at least one external electronic device and the electronic device, according to a specified interval. The processor may be configured to, based on executing a first application, identify a specified input indicating to store, in a preset area of the memory accessible by a second application different from the first application, at least one content displayed within the display. The processor may be configured to, based on the input, in a first status where the at least one external electronic device is identified using the obtained information, store data indicating the at least one content in the preset area, and display, within the display, a first visual object indicating the first status. The processor may be configured to, in a second status different from the first status, independently from displaying the visual object, store the data indicating the at least one content in the preset area, and display, within the display, a second visual object different from the first visual object.

According to an embodiment, a method of an electronic device may comprise obtaining information indicating a status of a connection, established by communication circuitry, between at least one external electronic device and the electronic device, according to a specified interval. The method may comprise, based on executing a first application, identifying a specified input indicating to store, in a preset area of memory accessible by a second application different from the first application, at least one content displayed within a display. The method may comprise, based on the input, in a first status where the at least one external electronic device is identified using the obtained information, storing data indicating the at least one content in the preset area, and displaying, within the display, a first visual object indicating the first status. The method may comprise, in a second status different from the first status, independently from displaying the visual object, storing the data indicating the at least one content in the preset area, and displaying, within the display, a second visual object different from the first visual object.

According to an embodiment, a computer readable storage medium storing one or more programs, the one or more programs, when executed by a processor of an electronic device, may obtain information indicating a status of a connection, established by communication circuitry, between at least one external electronic device and the electronic device, according to a specified interval. The one or more programs, based on executing a first application, may identify a specified input indicating to store, in a preset area of memory accessible by a second application different from the first application, at least one content displayed within a display. The one or more programs, based on the input, in a first status where the at least one external electronic device is identified using the obtained information, may store data indicating the at least one content in the preset area, and display, within the display, a first visual object indicating the first status. The one or more programs, in a second status different from the first status, independently from displaying the visual object, may store the data indicating the at least one content in the preset area, and display, within the display, a second visual object different from the first visual object.

### [Description of the Drawings]

FIG. 1 is a block diagram of an electronic device in a network environment according to various embodiments.
FIG. 2 is an exemplary block diagram of an electronic device according to an embodiment.
FIG. 3 is an exemplary diagram illustrating an operation in which an electronic device monitors a connection status, according to an embodiment.
FIG. 4 is an exemplary signal flowchart for displaying a visual object in response to at least one input by an electronic device according to an embodiment.
FIG. 5 is an exemplary flowchart illustrating an operation of an electronic device according to an embodiment.
FIG. 6 is an exemplary diagram illustrating a wired connection between an electronic device and an external electronic device, according to an embodiment.
FIG. 7 is an exemplary diagram illustrating a wireless connection between an electronic device and an external electronic device, according to an embodiment.
FIGS. 8A to 8B are exemplary diagrams illustrating an operation of displaying a visual object in response to at least one input by an electronic device, according to an embodiment.
FIG. 9 is an exemplary flowchart illustrating an operation of an electronic device according to an embodiment.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

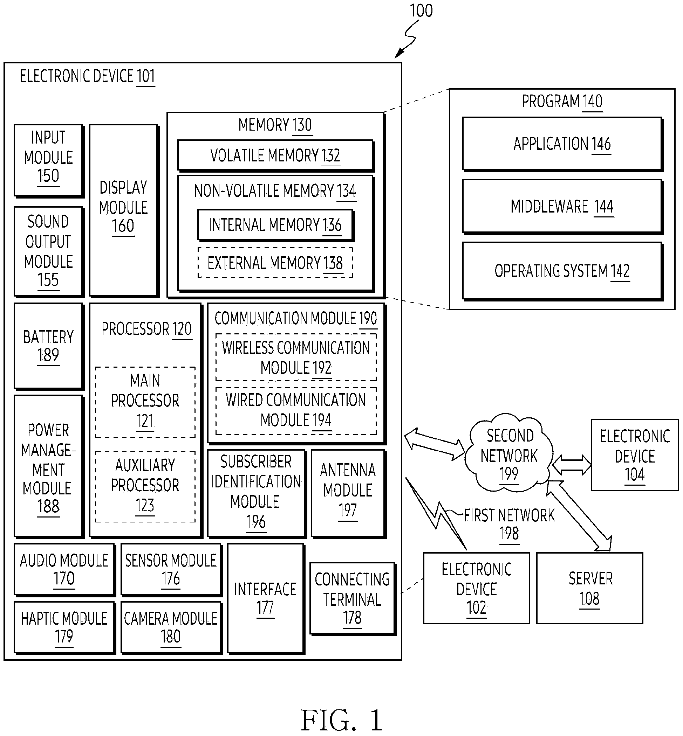

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

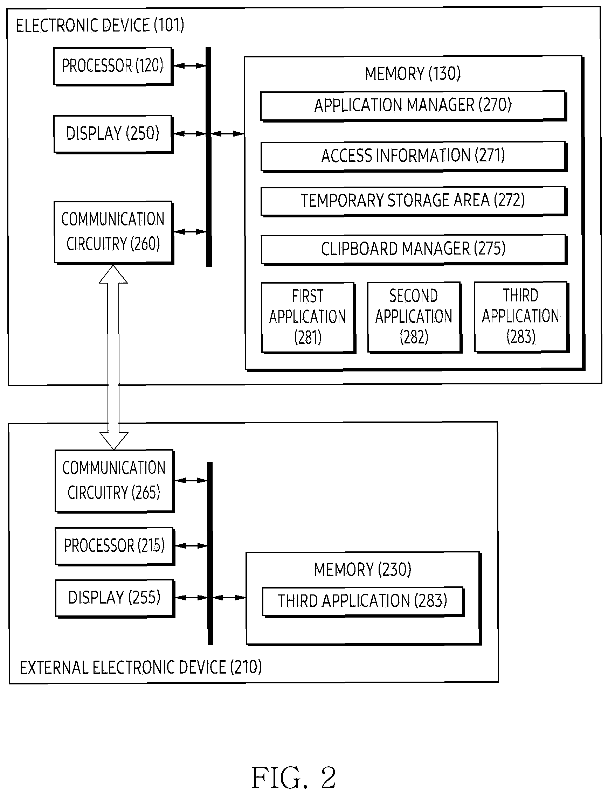

FIG. 2 is an exemplary block diagram of an electronic device according to an embodiment. An electronic device 101 of FIG. 2 may include the electronic device 101 of FIG. 1. Referring to FIG. 2, the electronic device 101 and an external electronic device 210 may be connected to each other based on a wired network and/or a wireless network. The wired network may include a network such as Internet, a local area network (LAN), a wide area network (WAN), Ethernet, or a combination thereof. The wireless network may include networks such as long term evolution (LTE), 5g new radio (NR), wireless fidelity (Wi-Fi), Zigbee, near field communication (NFC), Bluetooth, Bluetooth low-energy (BLE), or a combination thereof. Although the electronic device 101 and the external electronic device 210 are shown as being directly connected, the electronic device 101 and the external electronic device 210 may be connected indirectly through an intermediate node in the network.

The electronic device 101 according to an embodiment may include at least one of a processor 120, memory 130, communication circuitry 260, or a display 250. The processor 120, the memory 130, the communication circuitry 260, and the display 250 may be electronically and/or operably coupled with each other by an electronic component such as a communication bus. Hereinafter, hardware being operably coupled may mean that a direct connection or an indirect connection between the hardware is established by wire or wirelessly so that a second hardware is controlled by a first hardware among the hardware. Although illustrated based on different blocks, the embodiment is not limited thereto, and some (e.g., the processor 120, the memory 130, and the communication circuitry 260) of hardware of FIG. 2 may be included in a single integrated circuit such as a system on a chip (SoC). The type and/or number of hardware included in the electronic device 101 is not limited to those illustrated in FIG. 2. For example, the electronic device 101 may include only some of the hardware illustrated in FIG. 2.

According to an embodiment, the processor 120 of the electronic device 101 may include hardware for processing data based on one or more instructions. For example, the hardware for processing data may include an arithmetic and logic unit (ALU), a floating point unit (FPU), a field programmable gate array (FPGA), a central processing unit (CPU), and/or an application processor (AP). The processor 120 may have a single-core processor structure, or a multi-core processor structure such as a dual core, a quad core, or a hexa core. The processor 120 may include the processor 120 of FIG. 1.

According to an embodiment, the memory 130 of the electronic device 101 may include a hardware component for storing data and/or instruction inputted and/or outputted to the processor 120 of the electronic device 101. For example, the memory 130 may include a volatile memory such as a random-access memory (RAM) and/or a non-volatile memory such as a read-only memory (ROM). For example, the volatile memory may include at least one of a dynamic RAM (DRAM), a static RAM (SRAM), a cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, a solid state drive (SSD), and an embedded multi media card (eMMC). The memory 130 may include the memory 130 of FIG. 1.

According to an embodiment, the display 250 of the electronic device 101 may output visualized information to a user. For example, the display 250 may be controlled by the processor 120 including a circuit such as a graphic processing unit (GPU) to output visualized information to the user. The display 250 may include a flat panel display (FPD) and/or electronic paper. The FPD may include a liquid crystal display (LCD), a plasma display panel (PDP), and/or one or more light emitting diodes (LEDs). The LED may include organic LED (OLED). The display 250 may include the display module 160 of FIG. 1.

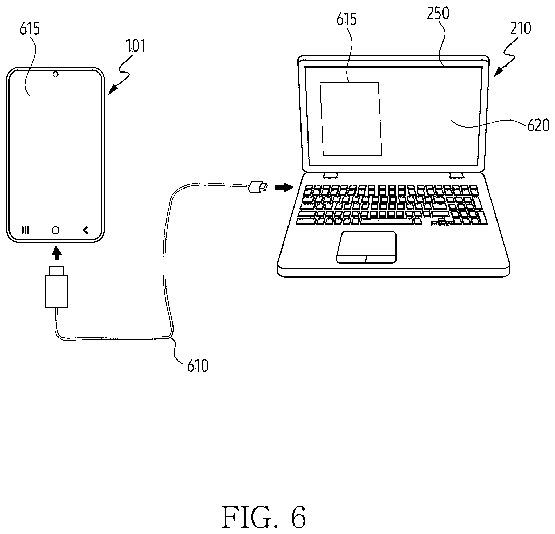

According to an embodiment, the communication circuitry 260 of the electronic device 101 may include a hardware component for supporting transmission and/or reception of an electrical signal between the electronic device 101 and the external electronic device 210. Although only the external electronic device 210 is illustrated as an electronic device connected to the electronic device 101 through the communication circuitry 260, the embodiment is not limited thereto. For example, the communication circuitry 260 may include at least one of a MODEM, an antenna, and an optic/electronic(O/E) converter. The communication circuitry 260 may support transmission and/or reception of an electrical signal based on various types of protocols such as Ethernet, a local area network (LAN), a wide area network (WAN), wireless fidelity (Wi-Fi), Bluetooth, Bluetooth low energy (BLE), ZigBee, long term evolution (LTE), and 5G new radio (NR). For example, the communication circuitry 260 of the electronic device 101 may include an interface (not illustrated) for establishing a connection with the external electronic device 210 by wire using at least one cable. An operation in which the electronic device 101 establishes a connection with the external electronic device 210 using a cable will be described later with reference to FIG. 6.

Referring to FIG. 2, in an embodiment, the external electronic device 210 may include at least one of a processor 215, memory 230, a display 255, or communication circuitry 265. Within the external electronic device 210, the processor 215, the memory 230, the display 255, and the communication circuitry 265 may be electronically and/or operably coupled with each other by a communication bus. The processor 215, the memory 230, the display 255, and the communication circuitry 265 included in the external electronic device 210 may include a hardware component and/or a circuit corresponding to the processor 120, the memory 130, the display 250, and the communication circuitry 260 of the electronic device 101. Hereinafter, in order to reduce repetition, a description of the processor 215, the memory 230, the display 255, and the communication circuitry 265 included in the external electronic device 210 may be omitted within a range overlapping the processor 120, the memory 130, the display 250, and the communication circuitry 260 in the electronic device 101.

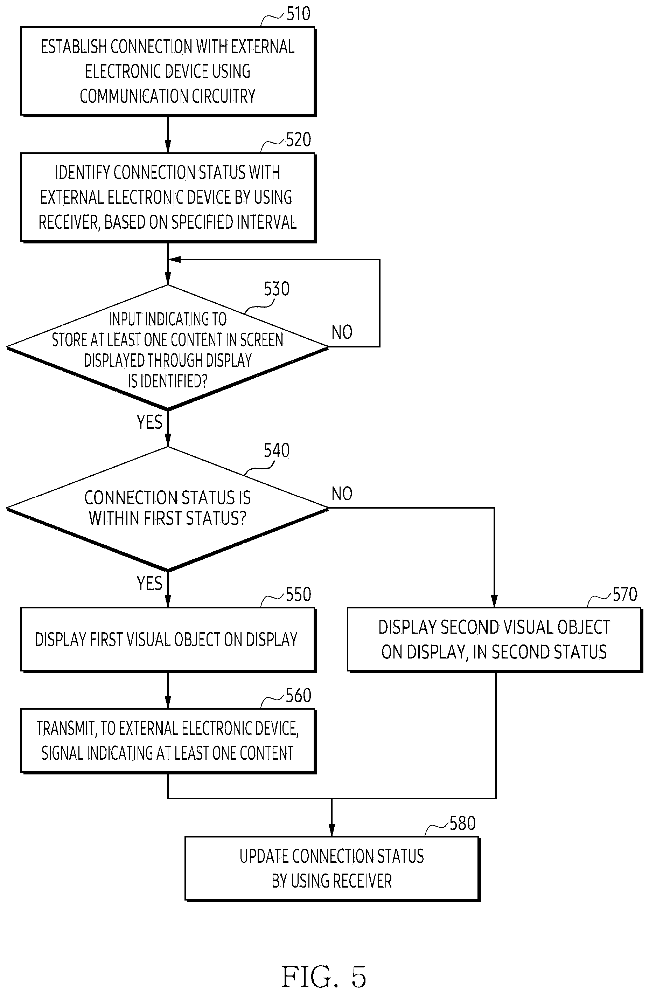

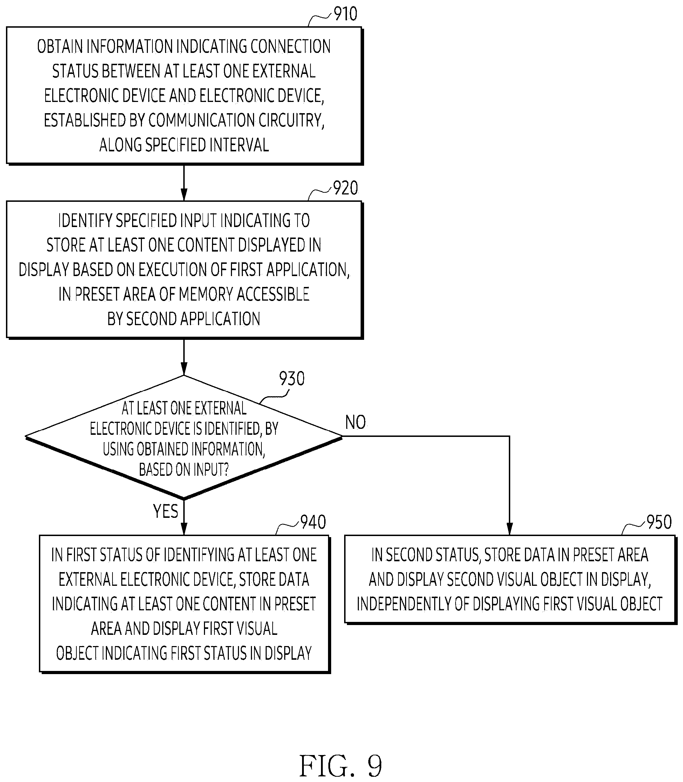

According to an embodiment, in the memory 130 of the electronic device 101 and/or the memory 230 of the external electronic device 210, one or more instructions (or commands) indicating a calculation and/or operation to be performed on data by the processor 120 of the electronic device 101 may be stored. A set of one or more instructions may be referred to as firmware, operating system, process, routine, sub-routine and/or application. Referring to FIG. 2, the processor 120 of the electronic device 101 may execute an application manager 270 in the memory 130 to perform at least one of operations of FIG. 5 or 9. Hereinafter, an application being installed in an electronic device (e.g., the electronic device 101, and/or the external electronic device 210) may mean that one or more instructions provided in a form of an application are stored in the memory of the electronic device, and that the one or more applications are stored in a format (e.g., a file having a specified extension by an operating system of an electronic device) executable by a processor of the electronic device.

Referring to FIG. 2, according to an embodiment, one or more instructions included in the memory 130 of the electronic device 101 may be divided into an application manager 270, access information 271, a temporary storage area 272, and/or one or more applications 281 and 282. For example, the one or more applications 281 and 282 may be connected to the electronic device 101 through the communication circuitry 260 and provided through a server (e.g., a third-party application store).

According to an embodiment, in a state in which the application manager 270 is executed, the processor 120 of the electronic device 101 may monitor (or observe) the access information 271. The access information 271 may mean a status of a connection established between the electronic device 101 and the external electronic device 210. For example, the access information 271 may include information indicating execution of a third application 283 stored in the memory 130 of the external electronic device 210. The processor 120 of the electronic device 101 may identify the external electronic device 210 based on monitoring the access information 271. The processor 120 of the electronic device 101 may update a connection status of the external electronic device 210 by using the communication circuitry 260 based on a specified time. For example, the electronic device 101 may identify information indicating the execution of the third application 283 within a background state.

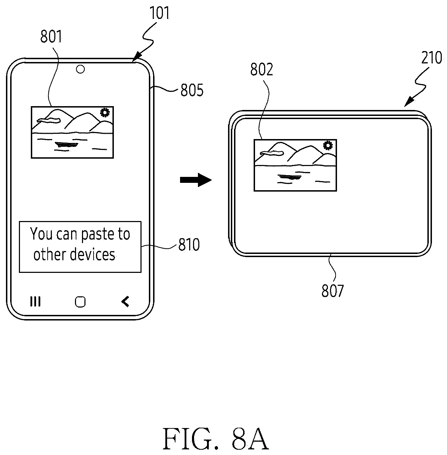

For example, the processor 120 of the electronic device 101 may identify an input indicating to store in the temporary storage area 272 of the memory 130 of the electronic device 101, in a state that a clipboard (or paste board) manager 275 is executed. Based on the identification of the input, the processor 120 of the electronic device 101 may store data indicating the at least one information in the temporary storage area 272. The temporary storage area 272 may be an example of an area formed in the memory 130 (e.g., volatile memory) by an operating system of the electronic device 101. The at least one information may include an image, text, and/or a vide. The temporary storage area 272 may be an area accessible to each of one or more applications 281 and 282. An operation in which the processor 120 of the electronic device 101 receives an input indicating to store in the temporary storage area 272 through a screen based on the one or more applications 281 and 282 will be described later in FIGS. 8A to 8B.

For example, an input indicating to store in the temporary storage area 272 may be an example of an input corresponding to at least one information displayed on the display 250 of the electronic device 101. As an example, the input may include a long press input corresponding to the at least one information. As an example, the input may include an input indicating to copy at least one information. As an example, the input may be obtained by a shortcut key. The shortcut key may be different according to an operating system installed in the electronic device 101. As an example, the shortcut key may include a first shortcut key (e.g., "ctrl key+c") and/or a second shortcut key (e.g., "command key+c"). However, it is not limited thereto.

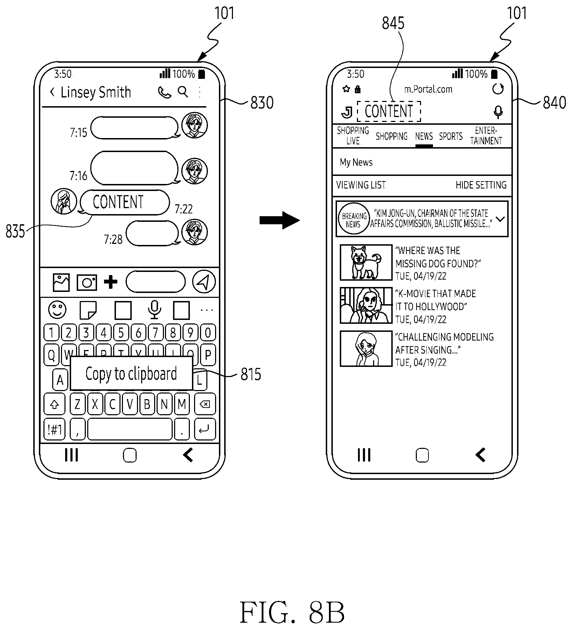

According to an embodiment, the processor 120 of the electronic device 101 may display a visual object on the display 250 of the electronic device 101, based on execution of the application manager 270, in response to an input indicating to store at least one information in the temporary storage area 272. The visual object may include information indicating, to a user, a connection status of the external electronic device 210. An operation in which the electronic device 101 displays a visual object on the display 250 will be described later with reference to FIGS. 8A and 8B.

According to an embodiment, the processor 120 of the electronic device 101 may establish a connection with the external electronic device 210 using the communication circuitry 260, based on execution of a third application 283. The processor 120 of the electronic device 101 may identify a connection status established with the external electronic device 210 by using the third application 283. For example, the processor 120 of the electronic device 101 may control at least a portion of operations of the external electronic device 210 by using the third application 283. The processor 120 of the electronic device 101 may update the access information 271 by using the identified connection status.

For example, the third application 283 may be an application for providing a communication service. For example, the third applications 283 may be one or more. The third application 283 may include an application (e.g., "DeX" or "DeX for PC") for establishing a connection with a first external electronic device (e.g., television (TV) or personal computer (PC)). The third application 283 may include an application (e.g., "Samsung flow" or "link to window") for establishing a connection with a second external electronic device (e.g., tablet PC or PC). The third application 283 may include an application (e.g., an application providing infotainment, "android auto" and/or "car play") for establishing a connection with a third external electronic device (e.g., an electronic device related to a car). The third application 283 may include an application (e.g., "MCF" or "multi-control") for establishing a connection with a plurality of external electronic devices. However, it is not limited thereto. As an example, the processor 120 of the electronic device 101 may establish a connection with at least one server (e.g., a cloud server) by using the third application 283.

For example, the processor 120 of the electronic device 101 may identify one or more external electronic devices based on execution of the third application 283. The processor 120 of the electronic device 101 may establish one or more connections with one or more external electronic devices by using the communication circuitry 260. The processor 120 of the electronic device 101 may update the access information 271 by using a status of each of the one or more established connections. The processor 120 of the electronic device 101 may comprehensively manage the status of each of the one or more connections by using the updated access information 271.

Referring to FIG. 2, according to an embodiment, in a state that the third application 283 is executed, the processor 215 of the external electronic device 210 may establish a communication link with the electronic device 101, by using the communication circuit 265. Based on the communication link, the external electronic device 210 may receive at least one signal from the electronic device 101. The received at least one signal may include information stored in the temporary storage area 272 of the electronic device 101. The processor 215 of the external electronic device 210 may display the information on the display 255 of the external electronic device 210. An operation in which the external electronic device 210 displays the information will be described later with reference to FIG. 8A.

As described above, according to an embodiment, the electronic device 101 may obtain the access information 271 by identifying the external electronic device 210 connected based on the third application 283. The electronic device 101 may perform different operations according to a status connected to the external electronic device 210, based on execution of the application manager 270, by using the access information 271. The electronic device 101 may perform the different operations in response to an input indicating to store in the temporary storage area 272. For example, the electronic device 101 may display a first visual object indicating the external electronic device 210, in response to the input, in a first status connected to the external electronic device 210. The electronic device 101 may display a second visual object indicating to store in the temporary storage area 272, in response to the input, in a second status in which a connection with the external electronic device 210 is not established. As the electronic device 101 performs different operations, the electronic device 101 may provide, to a user using a plurality of electronic devices including the electronic device 101 and/or the external electronic device 210, a user experience based on enhanced interconnectivity.

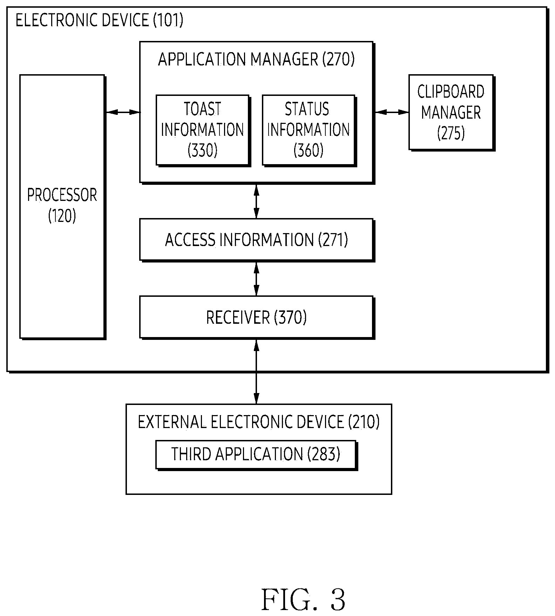

FIG. 3 is an exemplary diagram illustrating an operation in which an electronic device monitors a connection status, according to an embodiment. An electronic device 101 of FIG. 3 may include the electronic device 101 of FIGS. 1 to 2. An external electronic device 210 of FIG. 3 may include the external electronic device 210 of FIG. 2. Referring to FIG. 3, the electronic device 101 according to an embodiment may establish a connection with the external electronic device 210 using communication circuitry (e.g., the communication circuitry 260 of FIG. 2).

According to an embodiment, in a state in which a receiver 370 is executed, the electronic device 101 may receive at least one signal from the external electronic device 210. The electronic device 101 may identify a specified event using the receiver 370. The specified event may mean establishing a connection (or communication link) with the external electronic device 210 by using an application (e.g., the third application 283 of FIG. 3). For example, the external electronic devices 210 may be one or more. For example, types of one or more external electronic devices may be different. As an example, based on types of one or more external electronic devices, types of applications that the electronic device 101 may process by the receiver 370 may be different. However, it is not limited thereto.

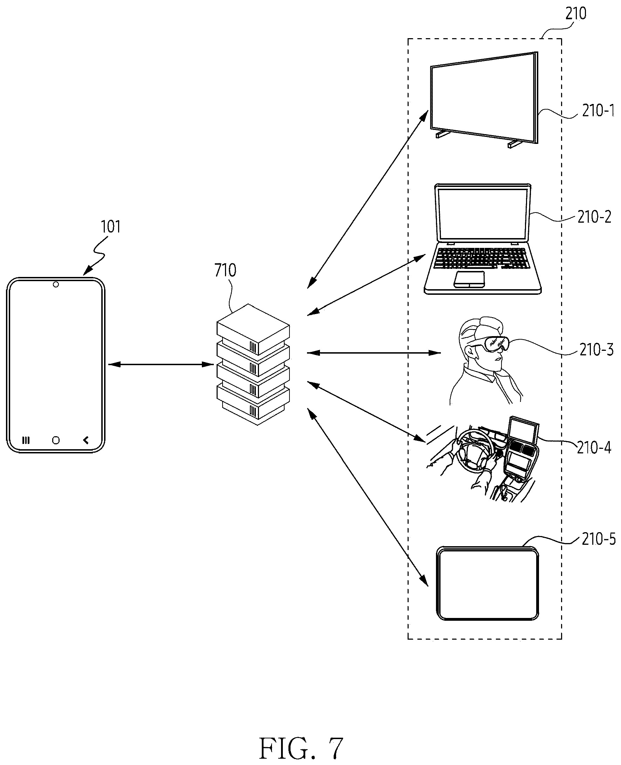

For example, the electronic device 101 may set a type of application (e.g., the third application 283) capable of being processed by the receiver 370. The receiver 370 may be referred to a broadcast receiver. As an example, the electronic device 101 may set information indicating the receiver 370 in a manifest of the application. The electronic device 101 may comprehensively manage a connection status of one or more external electronic devices obtained by using each of the one or more applications, by using the receiver 370. An operation in which the electronic device 101 establishes a connection with one or more external electronic devices using one or more applications will be described later in FIG. 7.

According to an embodiment, one or more instructions included in the application manager 270 of the electronic device 101 may be divided into toast information 330 and/or status information 360. For example, the electronic device 101 may generate data capable of being processed by the application manager 270, by using the receiver 370. The processor 120 of the electronic device 101 may obtain the access information 271 by using the generated data. For example, the processor 120 of the electronic device 101 may monitor the access information 271 based on execution of the application manager 270. The processor 120 of the electronic device 101 may update the status information 360 included in the application manager 270 by monitoring the access information 271.

For example, the access information 271 may be different based on a type of application (e.g., the third application 283) identified by the receiver 370. For example, the access information 271 may include one or more data (e.g., key value). First data (e.g., 0) may mean a status in which an external electronic device (the external electronic device 210 of FIG. 2) is not identified. Second data (e.g., 1) may mean a status in which a wired cable is inserted into an interface (not illustrated) of each of the electronic device 101 and the external electronic device 210. Third data (e.g., 2) may mean a status in which the third application 283 of the external electronic device 210 is executed. Fourth data (e.g., 3) may mean a status in which a connection (or communication link) between the electronic device 101 and the external electronic device 210 is established based on the third application 283 of each of the electronic device 101 and the external electronic device 210.

For example, the access information 271 may include data indicating a status in which the electronic device 101 identifies one or more external electronic devices. The first data (e.g., 0) may mean a status in which the electronic device 101 fails to identify a first external electronic device (e.g., a smartphone) or a second external electronic device (e.g., a tablet PC). The second data (e.g., 1) may mean a status in which the electronic device 101 identifies the first external electronic device among the first external electronic device and the second external electronic device. The third data (e.g., 2) may mean a status in which the electronic device 101 identifies a second external electronic device among the first external electronic device and the second external electronic device. The fourth data (e.g., 3) may mean a status of identifying the first external electronic device and the second external electronic device.

For example, the electronic device 101 may identify data included in the access information 271 by monitoring the access information 271, based on the execution of the application manager 270. Based on the identified data, the electronic device 101 may obtain status information 360. As an example, the electronic device 101 may store the status information 360 in a preset area different from the temporary storage area 272 of FIG. 2. However, it is not limited thereto. For example, the electronic device 101 may identify that a connection status with the external electronic device 210 connected using the communication circuitry 260 is changed by the receiver 370. The electronic device 101 may update data included in the access information 271 based on identifying that the connection status is changed. The electronic device 101 may update the status information 360 based on the updated access information 271. For example, the electronic device 101 may monitor data included in the access information 271, based on a specified time. However, it is not limited thereto.

According to an embodiment, the electronic device 101 may receive an input indicating to store in the temporary storage area 272 of FIG. 2, based on execution of the clipboard manager 275. The electronic device 101 may obtain data capable of being processed by the application manager 270, in response to the received input. The electronic device 101 may display a visual object (or toast) on a display of the electronic device 101, in response to the input, based on the status information 360. For example, the toast information 330 may mean information indicating the visual object.

For example, the electronic device 101 may distinguish a connection status from an external electronic device based on the status information 360. The electronic device 101 may display a first visual object on a display of the electronic device 101, in response to the input, by using the toast information 330, in a first status identifying the external electronic device. The first visual object may include specified text information (e.g., "you can paste to other devices") for guiding that information selected by the input is capable of being transmitted to the external electronic device. In response to the input, the electronic device 101 may display a second visual object in the display of the electronic device 101, by using the toast information 330, in a second status in which the external electronic device is not identified, based on the status information 360. The second visual object may include text information (e.g., "copy to clipboard") indicating to store information corresponding to the input in a preset area (e.g., the temporary storage area 272 of FIG. 2) of the memory of the electronic device 101. However, it is not limited thereto. An operation in which the electronic device 101 displays different visual objects based on the status information 360 will be described later with reference to FIGS. 8A to 8B.

As described above, according to an embodiment, the electronic device 101 may identify a connection status with the external electronic device 210 by using the receiver 370. For example, the electronic device 101 may identify the connection status, by using information indicating execution of an application (e.g., the third application 283 of FIG. 2) for establishing a connection with the external electronic device 210. The electronic device 101 may obtain or update the status information 360, by using data corresponding to the identified connection status. In a state of obtaining the status information 360, the electronic device 101 may receive, from a user, an input indicating to store at least one information displayed on the display. The electronic device 101 may display a visual object corresponding to the status information 360 on the display, in response to the received input. The electronic device 101 may enhance a user experience by displaying a visual object corresponding to the status information 360.

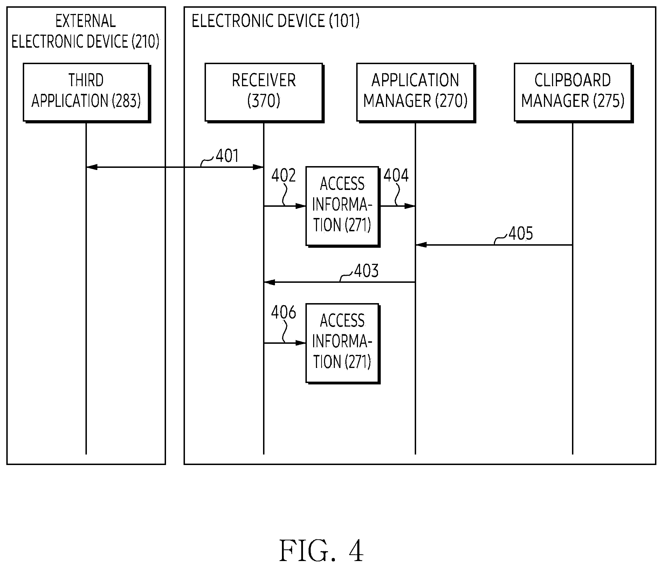

FIG. 4 is an exemplary signal flowchart for displaying a visual object in response to at least one input by an electronic device according to an embodiment. An electronic device 101 of FIG. 4 may include the electronic device 101 of FIGS. 2 to 3. An external electronic device 210 may include the external electronic device 210 of FIGS. 2 to 3.

Referring to FIG. 4, according to an embodiment, the electronic device 101 may establish a connection with the external electronic device 210, by using communication circuitry (e.g., the communication circuitry 260 of FIG. 2). For example, the electronic device 101 may establish a connection with the external electronic device 210, based on execution of a third application 283 that provides a communication service. The electronic device 101 may receive a signal 401 indicating a connection status with the external electronic device 210 by using a receiver 370 based on a specified interval. The electronic device 101 may obtain the access information 271 by using data 402 corresponding to the third application 283 stored in the electronic device 101, based on receiving the signal 401. The data 402 corresponding to the third application 283 may include information indicating a connection status between the electronic device 101 and the external electronic device 210 and/or a status identifying the external electronic device 210. As an example, in case that the electronic device 101 installs an application different from the third application 283, information corresponding to the different application may be included in the access information 271.

According to an embodiment, the electronic device 101 may monitor the access information 271, based on execution of the application manager 270. For example, the electronic device 101 may obtain data 404 capable of being processed by the application manager 270, by monitoring the access information 271. The electronic device 101 may obtain the status information 360 of FIG. 3 by using the data 404.

According to an embodiment, in a state of obtaining the data 404, the electronic device 101 may receive at least one input based on execution of the clipboard manager 275. As an example, although not illustrated, when receiving the at least one input by the clipboard manager 275, the electronic device 101 may set the clipboard manager 275 to obtain data capable of being processed by the application manager 270. The at least one input may mean an input indicating to store at least one information displayed on a display (e.g., the display 250 of FIG. 2) of the electronic device 101. In response to the input, the electronic device 101 may obtain data 405 capable of being processed by the application manager 270. For example, the electronic device 101 may identify status information (e.g., the status information 360 of FIG. 3) capable of being managed based on the execution of the application manager 270, in response to the input. The electronic device 101 may display a visual object (or toast) in a specified display area of the display of the electronic device 101, based on the status information. The visual object may be obtained by the toast information 330 of FIG. 3. As an example, the visual object may be used to elucidate to the user information indicating to store the at least one information.

According to an embodiment, the electronic device 101 may obtain the data 403 for updating information indicating a status of the external electronic device 210, by the receiver 370, based on displaying the visual object. As an example, the data 403 may be obtained after a specified time (e.g., about 10 seconds).

For example, although not illustrated, in order to obtain information indicating a connection status with the external electronic device 210, the electronic device 101 may transmit at least one signal to the external electronic device 210. In response to whether another signal corresponding to the at least one signal is received from the external electronic device 210, the electronic device 101 may obtain data 406 for updating the access information 271, based on the execution of the receiver 370. In a first status in which the electronic device 101 receives the other signal, the electronic device 101 may obtain data 406 indicating a connection with the external electronic device 210. In a second status in which the electronic device 101 fails to receive the other signal, the electronic device 101 may obtain data 406 indicating a disconnection with the external electronic device 210. For example, a status of disconnecting with an external electronic device may include a status in which execution of an application (e.g., the third application 283) to provide a communication link with an external electronic device is terminated. At least one data in the access information 271 updated by the electronic device 101 based on the data 406 indicating the disconnection with the external electronic device 210 may be referred to as a default value. However, it is not limited thereto.

According to an embodiment, the electronic device 101 may update the access information 271 based on obtaining the data 406. The electronic device 101 may update status information (e.g., the status information 360 of FIG. 3) by monitoring the updated access information 271, based on the execution of the application manager 270.

As described above, according to an embodiment, the electronic device 101 may establish a connection with the external electronic device 210, based on linking the third application 283 installed in the electronic device 101 and/or the external electronic device 210, based on a specified interval. For example, the electronic device 101 may identify the connection status with the external electronic device 210, based on the execution of the receiver 370. In a status of identifying the connection status, the electronic device 101 may display a visual object, in response to an input indicating to store at least one information displayed in a display of the electronic device 101. By displaying the visual object, the electronic device 101 may clearly provide, to the user, information indicating to store at least one information and/or information indicating a connection status with the external electronic device 101.

FIG. 5 is an exemplary flowchart illustrating an operation of an electronic device according to an embodiment. At least one of operations of FIG. 5 may be performed by the electronic device 101 of FIG. 2 and/or the processor 120 of the electronic device 101 of FIG. 2. In the following embodiment, each operation may be performed sequentially, but is not necessarily performed sequentially. For example, the sequence of each operation may be changed, and at least two operations may be performed in parallel.

Referring to FIG. 5, according to an embodiment, in operation 510, a processor may establish a connection with an external electronic device (e.g., the external electronic device 210 of FIG. 2) using communication circuitry. The processor may establish a connection with an external electronic device, based on execution of an application (e.g., the third application 283 of FIG. 2) for providing a communication service. As an example, the processor may establish a connection with an external electronic device wirelessly and/or wiredly.

Referring to FIG. 5, according to an embodiment, in operation 520, the processor may identify a connection status with an external electronic device by using a receiver, based on a specified interval. For example, the processor may receive at least one signal (e.g., the signal 401 of FIG. 4) from an external electronic device, based on execution of a receiver (e.g., the receiver 370 of FIG. 3), based on a specified interval. The processor may obtain data (e.g., the data 402 of FIG. 4) for updating access information (e.g., the access information 271 of FIG. 2), based on receiving at least one signal. The processor may obtain data (e.g., the data 404 of FIG. 4) for updating status information, based on execution of an application manager (e.g., the application manager 270 of FIG. 2), based on updating the access information. The processor may manage the status of one or more applications (e.g., the third application 283 of FIG. 2) including an application used to establish a connection with an external electronic device, by updating the status information, based on execution of the application manager. The processor may identify a connection status with an external electronic device, based on managing the status of the one or more applications.

Referring to FIG. 5, according to an embodiment, in operation 530, the processor may verify whether an input indicating to store at least one content in a screen displayed through the display is identified. The processor may display a screen based on execution of applications (e.g., the first application 281 and/or the second application 282 of FIG. 2) different from an application (e.g., the third application 283 of FIG. 2) providing a communication service, by controlling a display (e.g., the display 250 of the electronic device 101 of FIG. 2). The screen may include at least one content (or information). The processor may receive an input indicating to store at least one content, by using the screen. The processor may receive the input, based on the execution of the clipboard manager 275 of FIG. 2. The input indicating to store the at least one content may be referred to an input for storing information indicating the at least one content in the temporary storage area 272 of the memory 130 of the electronic device of FIG. 2. For example, in response to a plurality of contents, the processor may identify a plurality of inputs indicating to store each of the contents. Based on identifying the plurality of inputs, the processor may stack, in the temporary storage area 272, information indicating each of a plurality of contents corresponding to each of the plurality of inputs. According to an embodiment, the processor may perform operation 530 when an input indicating to store at least one content is not received (operation 530-NO).

Referring to FIG. 5, according to an embodiment, when receiving an input indicating to store at least one content (operation 530-YES), in operation 540, the processor may identify whether a connection status is within a first status. The processor may identify the first status in which a connection with an external electronic device is established, based on status information (e.g., the status information 360 of FIG. 3). For example, the processor may identify the first status, in response to at least one input using a screen including at least one content displayed on the display. For example, based on execution of an application manager (e.g., the application manager 270 of FIG. 2), the processor may obtain data (e.g., the data 405 of FIG. 4) to identify a visual object corresponding to the first status, in response to the at least one input.

Referring to FIG. 5, according to an embodiment, in operation 550, the processor may display a first visual object on the display within the first status (operation 540-YES). The processor may display the first visual object corresponding to the first status on the display, by using toast information (e.g., the toast information 330 of FIG. 3). The first visual object may include information indicating a connection status between the electronic device and the external electronic device. The processor may explicitly provide, to a user, an external electronic device capable of transmitting information indicating at least one content, by displaying the first visual object.

Referring to FIG. 5, according to an embodiment, in operation 560, the processor may transmit, to an external electronic device, a signal indicating at least one content. The signal may include information indicating at least one content stored in a temporary storage area (e.g., the temporary storage area 272 of FIG. 2). For example, the processor may transmit the signal to an external electronic device, in response to displaying the first visual object. For example, after receiving another signal requesting a signal indicating the at least one content from an external electronic device, the processor may transmit a signal indicating the at least one content to the external electronic device. However, it is not limited thereto.

Referring to FIG. 5, according to an embodiment, in a second status different from the first status (operation 540-NO), the processor may display a second visual object on the display in operation 570. For example, the second status may mean a status in which the connection between the electronic device and the external electronic device is disconnected. The second visual object may include text indicating that to store information indicating the at least one content in a temporary storage area (e.g., the temporary storage area 272 of FIG. 2) of the memory of the electronic device of FIG. 2.

Referring to FIG. 5, according to an embodiment, in operation 580, the processor may update the connection status by using the receiver. The processor may identify the connection status with the external electronic device by using the receiver, based on a specified interval. The processor may obtain data (e.g., the data 406 of FIG. 4) for storing information indicating the identified connection status in at least a portion of the access information 271. The processor may update the access information, based on obtaining the data. The processor may change status information of the application manager 270 that monitors (or observes) the access information, based on updating the access information. As an example, the processor may change at least one data included in the status information to a default value. As an example, the processor may perform an operation of changing the status information within a background status. However, it is not limited thereto.

FIG. 6 is an exemplary diagram illustrating a wired connection between an electronic device and an external electronic device, according to an embodiment. An electronic device 101 of FIG. 6 may be referred to the electronic device 101 of FIGS. 1 to 2. An external electronic device 210 of FIG. 6 may be referred to the external electronic device 210 of FIG. 2.

Referring to FIG. 6, according to an embodiment, the electronic device 101 may establish a wired connection with the external electronic device 210 by using a cable 610. The electronic device 101 may establish a connection with the external electronic device 210, based on execution of at least one application (e.g., the third application 283 of FIG. 2). The electronic device 101 may transmit information on a first screen 615 to the external electronic device 210. The first screen 615 may be an example of a screen based on execution of the first application 281 of FIG. 2.

According to an embodiment, the first screen 615 based on the information received from the electronic device 101 by using the cable 610 may be displayed in the display of the external electronic device 210 (e.g., the display 255 of the external electronic device 210 of FIG. 2). For example, while displaying the first screen 615 in a portion of a display area of the display 255 of the external electronic device 210, the external electronic device 210 may display a second screen 620 in a portion different from the portion. For example, a portion of the display area of the display 255 of the external electronic device 210 in which the first screen 615 is displayed may be referred to as a pop-up window. The second screen 620 may be an example of a screen based on at least one application stored in the external electronic device 210. For example, the external electronic device 210 may control the electronic device 101 using the first screen 615. The external electronic device 210 may receive an input indicating to store at least one content included in the first screen 615. Based on receiving the input, the external electronic device 210 may transmit a signal corresponding to the input to the electronic device 101 by using the cable 610. The electronic device 101 may perform at least one of the operations of FIG. 5, based on receiving the signal. However, it is not limited thereto.

For example, the external electronic device 210 may identify an input indicating to display at least one content stored by the electronic device 101 by using the second screen 620. The input may be identified based on a specified shortcut key (e.g., "ctrl+v" or "command+v"). For example, an input indicating to display the at least one stored content may mean pasting the at least one stored content into the second screen 620. For example, the electronic device 101 may receive a signal corresponding to the input from the external electronic device 210 by using the second screen 620. Based on receiving the signal, the electronic device 101 may transmit another signal including information indicating the at least one stored content to the external electronic device 210 by using the cable 610.

According to an embodiment, in a status of establishing a wired connection with the external electronic device 210 by using the cable 610, the electronic device 101 may establish a connection with another external electronic device by using an application different from at least one application for establishing a connection with the external electronic device 210. In a status of establishing a connection with the external electronic device 210 and/or the other external electronic device by using one or more applications, the electronic device 101 may perform at least one of the operations of FIG. 5. An operation in which the electronic device 101 displays at least one visual object on a display of the electronic device 101 by performing the at least one will be described later in FIGS. 8A to 8B.

FIG. 7 is an exemplary diagram illustrating a wireless connection between an electronic device and an external electronic device, according to an embodiment. An electronic device 101 of FIG. 7 may include the electronic device 101 of FIGS. 1 to 2. An external electronic device 210 may include the external electronic device 210 of FIG. 2. For example, the external electronic devices 210 may be one or more.

Referring to FIG. 7, according to an embodiment, a status in which the electronic device 101 and the external electronic device 210 indirectly establish a connection using a server 710 is illustrated. Although it is illustrated that the electronic device 101 and the external electronic device 210 are indirectly connected through the server 710, the electronic device 101 and the external electronic device 210 may be directly connected.

According to an embodiment, the electronic device 101 may identify the connected external electronic device 210 by using the server 710. For example, the server 710 may be a server that provides a network service for controlling or managing one or more electronic devices. The electronic device 101 and the external electronic device 210 may be logged in based on the same user account, but are not limited thereto.

Referring to FIG. 7, according to an embodiment, the electronic device 101 may wirelessly establish a connection with a first external electronic device 210-1 (e.g., television (TV)) based on at least one application (e.g., the third application 283 of FIG. 2) (e.g., DeX). In a status of establishing a connection with the first external electronic device 210-1, the electronic device 101 may perform at least one of the operations of FIG. 5. For example, the electronic device 101 may receive, from the first external electronic device 210-1, a signal requesting information indicating at least one content stored in a temporary storage area (e.g., the temporary storage area 272 of FIG. 2) of the electronic device 101. Based on receiving the signal, the electronic device 101 may transmit, to the first external electronic device 210-1, another signal including information indicating at least one content. Based on receiving the other signal including the information indicating the at least one content, the first external electronic device 210-1 may display the at least one content on a display (e.g., the display 255 of FIG. 2) of the first external electronic device 210-1. An operation in which the first external electronic device 210-1 displays the at least one content based on a signal between the electronic device 101 and the first external electronic device 210-1 will be described later in FIG. 8A.

Referring to FIG. 7, according to an embodiment, the electronic device 101 may establish a connection with a second external electronic device 210-2 (e.g., a laptop or a PC), based on execution of at least one application (e.g., link to window). In a status of establishing a connection with the second external electronic device 210-2, the electronic device 101 may perform at least one of the operations of FIG. 5. The electronic device 101 may receive, from the second external electronic device 210-2, a signal including an input indicating a specified shortcut key (e.g., "ctrl+v" or "command+v"). Based on receiving the signal, the electronic device 101 may transmit, to the second external electronic device 210-2, another signal including information indicating at least one content included in the temporary storage area. For example, although not illustrated, the second external electronic device 210-2 may display, on a display of the second external electronic device 210-2, at least a portion of a screen displayed on the display of the electronic device 101. As an example, the at least a portion may be referred to a first screen 615 displayed on the display of the external electronic device 210 of FIG. 6.

Referring to FIG. 7, the electronic device 101 may establish a communication link with a third external electronic device 210-3, based on execution of at least one application. The third external electronic device 210-3 may include a head-mounted display (HMD) wearable on the user's head. In terms of being wearable by the user, the third external electronic device 210-3 may be referred to as a wearable device. For example, the electronic device 101 and/or the third external electronic device 210-3 may provide, to the user, augmented reality (AR), virtual reality (VR), or mixed reality (MR) in which augmented reality and virtual reality are mixed. In a status of establishing a connection with the third external electronic device 210-3, the electronic device 101 may perform at least a portion of the operations of FIG. 5.

Referring to FIG. 7, according to an embodiment, the electronic device 101 may establish a connection with a fourth external electronic device 210-4 (e.g., an electronic device related to a car), based on execution of at least one application (e.g., an application providing infotainment, "android auto" and/or "car play"). As an example, the electronic device 101 may establish a connection with the fourth external electronic device 210-4 by using communication circuitry, independently of the execution of at least one application. As an example, the electronic device 101 may identify a vehicle on which the fourth external electronic device 210-4 is mounted. The electronic device 101 may identify movement of the vehicle based on a specified interval. Using information indicating the identified movement of the vehicle, the electronic device 101 may update access information (e.g., the access information 271 of FIG. 2) by using a receiver (e.g., the receiver 370 of FIG. 3). When a signal is not received from the fourth external electronic device 210-4 based on the specified interval, the electronic device 101 may change data corresponding to information indicating the movement of the vehicle included in the access information to a default value. However, it is not limited thereto.

For example, the electronic device 101 may establish a communication link based on Bluetooth low-energy (BLE) with the fourth external electronic device 210-4. In a status of establishing a communication link with the fourth external electronic device 210-4, the electronic device 101 may perform at least one of the operations of FIG. 5.

Referring to FIG. 7, according to an embodiment, the electronic device 101 may establish a connection with a fifth external electronic device 210-5 based on execution of at least one application. The electronic device 101 may identify a status indicating execution of the at least one application by using a receiver. The electronic device 101 may update the access information 271 by using information indicating the status identified by using the receiver. The status indicating the execution of the at least one application may be referred to as a connection status of the electronic device 101 and the fifth external electronic device 210-5 and/or an active status of at least one application. The electronic device 101 may perform at least one of the operations of FIG. 5 while identifying the status.

For example, the electronic device 101 may identify the fifth external electronic device 210-5 based on a user account identical to a user account logged in the electronic device 101. The electronic device 101 may perform at least one of the operations of FIG. 5, based on identifying the fifth external electronic device 210-5 included within a specified range.

As mentioned above, according to an embodiment, the electronic device 101 may establish a connection with a plurality of external electronic devices 210-1, 210-2, 210-3, 210-4, and 210-5. In order to establish a connection with the plurality of external electronic devices, the electronic device 101 may use a plurality of applications corresponding to each of the plurality of external electronic devices. The electronic device 101 may identify information indicating a status of each of the plurality of applications by using a receiver (e.g., the receiver 370 of FIG. 3). The electronic device 101 may update the access information 271 by using information indicating the status of each of the plurality of applications. The electronic device 101 may update the access information 271 based on a category corresponding to each of the plurality of applications. Data values indicating the status of each of the plurality of applications stored in the access information 271 by the electronic device 101 may be different from each other. The electronic device 101 may obtain status information (e.g., the status information 360 of FIG. 2) by monitoring access information, based on execution of the application manager 270. The electronic device 101 may comprehensively manage the status corresponding to each of the plurality of applications, by obtaining the status information. By comprehensively managing the status, the electronic device 101 may process at least one input (e.g., an input indicating to store at least one content) more quickly, based on the execution of the clipboard manager 275.

FIGS. 8A to 8B are exemplary diagrams illustrating an operation of displaying a visual object in response to at least one input by an electronic device, according to an embodiment. An electronic device 101 of FIGS. 8A and 8B may include the electronic device 101 of FIGS. 1 to 7. An external electronic device 210 may include the external electronic device 210 of FIGS. 2 to 7.

Referring to FIG. 8A, according to an embodiment, the electronic device 101 may transmit, to the external electronic device 210, at least one signal, in a status of establishing a connection with the external electronic device 210 by using communication circuitry (e.g., the communication circuitry 260 of FIG. 2). For example, the electronic device 101 may display, on a display (e.g., the display 250 of FIG. 2) of the electronic device 101, a screen 805 based on the execution of the first application 281 of FIG. 2. The screen 805 may include at least one content 801. The at least one content 801 may include text information, image information, and/or video information. For example, the electronic device 101 may identify a connection status established with the external electronic device 210, based on a specified time, by using the receiver 370 of FIG. 3, while displaying at least one content 801 on the display. The electronic device 101 may receive an input indicating to store the at least one content 801 in the temporary storage area 272 of FIG. 2, while identifying the connection status.

According to an embodiment, in response to receiving an input indicating to store at least one content 801, the electronic device 101 may identify status information (e.g., the status information 360 of FIG. 2) based on the execution of the application manager 270 of FIG. 2. For example, the status information may include information indicating a connection status between the electronic device 101 and the external electronic device 210. The electronic device 101 may display the first visual object 810 on the display, by using the toast information 330 of FIG. 3, within the first status identifying the external electronic device 210. For example, the first visual object 810 may be referred to as a toast and/or a pop-up window. For example, the first status may include a status in which a communication link is established using communication circuitry between electronic device 101 and external electronic device 210, and/or a status in which the electronic device 101 identifies the external electronic device 210 located within a specified range.

For example, in response to receiving the input, the electronic device 101 may display the first visual object 810 on a portion of the display area of the electronic device 101. The first visual object 810 may include information indicating a first status. The first visual object 810 may include information indicating the external electronic device 210. The first visual object 810 may include information indicating that information indicating the at least one content 801 may be transmitted to the external electronic device 210. The first visual object 810 may include text information (e.g., "you can paste to other devices").

For example, the electronic device 101 may change the information included in the first visual object 810, based on a type of application for establishing a connection with the external electronic device 210 and/or the number or type of external electronic devices connected to the electronic device 101. Information included in the first visual object 810 may be changed. For example, the electronic device 101 may change the information included in the first visual object 810 by using the status information 360 of FIG. 3 and/or the toast information 330 of FIG. 3. As an example, in a status of establishing a connection with the first external electronic device 210-1 of FIG. 7, the electronic device 101 may display, on the display, a first visual object 810 including text information (e.g., "Copied. You can paste here or on your nearby device.", or "Copied. You can paste here or on your connected device. "), by using the status information 360 of FIG. 3 and/or the toast information 330 of FIG. 3. For example, in a status of establishing a connection with one or more external electronic devices, the electronic device 101 may display a first visual object 810 including text information (e.g., "copied. You can paste here or on your connected devices") on the display. However, it is not limited to the above-described embodiment.

For example, although not illustrated, the external electronic device 210 may receive a signal indicating an input indicating to store at least one content 801, from the electronic device 101, in the first status of establishing a connection with the electronic device 101. The external electronic device 210 may display another visual object including information, similar to the first visual object 810, on a display of the external electronic device 210, based on receiving the signal. As an example, the other visual object may include text information (e.g., "copied to clipboard"). However, it is not limited thereto.

According to an embodiment, the external electronic device 210 may receive an input indicating to display at least one content 802 stored in the temporary storage area 272 of the electronic device 101, by using a screen 807 displayed in a display (e.g., the display 255 of FIG. 2) of the external electronic device 210. The screen 807 may be an example of a screen based on at least one of applications stored in the external electronic device 210.

For example, the external electronic device 210 may transmit a signal corresponding to the input to the electronic device 101. The electronic device 101 may transmit information indicating at least one content 802 to the external electronic device 210, based on receiving the signal. For example, based on receiving the information, the external electronic device 210 may display or paste at least one content 802 on the display of the external electronic device 210. However, it is not limited to the above-described embodiment. As an example, in response to an input indicating to store at least one content 801, the electronic device 101 may transmit information indicating at least one content 802 to the external electronic device 210, while displaying the first visual object 810 on a portion of the display area of the display. For example, the at least one content 801 may include information similar to the at least one content 802.

According to an embodiment, based on displaying the first visual object 810 on the display of the electronic device 101, the electronic device 101 may obtain data (e.g., the data 403 of FIG. 4), capable of being processed by the receiver 370 for updating the status information 360 of FIG. 3, based on execution of the application manager 270 of FIG. 2, after a specified time. The electronic device 101 may obtain data (e.g., the data 406 of FIG. 4) for updating the access information 271, from the receiver 370, based on obtaining the data. The electronic device 101 may identify the first status in which a connection with the external electronic device 210 is established, by updating the access information 271. The electronic device 101 may receive information indicating at least one content 802 from the external electronic device 210, based on identifying the first status. The electronic device 101 may transmit information indicating at least one content 801 to the external electronic device 210, in response to the received information. However, it is not limited thereto.

Referring to FIG. 8B, according to an embodiment, the electronic device 101 may receive at least one input in a second status in which a connection with the external electronic device 210 is not established. For example, the second status may include a status in which communication circuitry between the electronic device 101 and the external electronic device 210 and/or a connection based on an application is not established. The second status may include a status in which the external electronic device 210 is not located within a specified range including the electronic device 101.

For example, in the second status, the electronic device 101 may display a screen 830 based on execution of a first application (e.g., the first application 281 of FIG. 2) on the display of the electronic device 101. The electronic device 101 may receive an input indicating to store at least one content 835 included in the screen 830. The at least one content 835 may include text information, image information, and/or video information. In response to receiving the input, the electronic device 101 may identify status information (e.g., the status information 360 of FIG. 3) and/or toast information (e.g., the toast information 330 of FIG. 3), based on execution of the application manager 270 of FIG. 2. The status information may include information indicating the second status.

For example, the electronic device 101 may display the second visual object 815 on a portion of the display area of the electronic device 101, based on identifying status information and/or toast information. The second visual object 815 may include information indicating to store at least one content in the temporary storage area 272 of FIG. 2. The second visual object 815 may include text information (e.g., "Copy to clipboard"). As an example, a position in which the electronic device 101 displays the second visual object 815 on the display of the electronic device 101 may be similar to a position in which the first visual object 810 of FIG. 8A is displayed.

According to an embodiment, the electronic device 101 may display a screen 840 based on execution of a second application (e.g., the second application 282 of FIG. 2) on the display of the electronic device 101. The electronic device 101 may receive an input indicating to display at least one content 835 stored in the temporary storage area 272 of FIG. 2 using the display. The electronic device 101 may display, on the display, at least one content 845 including at least a portion of the at least one content 835, in response to the input. However, it is not limited thereto. As an example, the electronic device 101 may receive the input, in a status of displaying the screen 830, based on execution of a first application (e.g., the first application 281 of FIG. 2). In a status of displaying the screen 830, the electronic device 101 may display at least one content 835 on at least a portion of the display, in response to the input.

As described above, according to an embodiment, the electronic device 101 may identify an input indicating to copy at least one content included in the screen, while displaying the screen by controlling the display. Based on execution of an application manager (e.g., the application manager 270 of FIG. 2), the electronic device 101 may display a visual object (e.g., the first visual object 810 and/or the second visual object 815) in response to the input, by using status information and/or toast information. The electronic device 101 may protect user privacy for at least one content, by displaying the visual object. The electronic device 101 may provide a user notification for security of at least one content, by displaying the visual object. Based on the execution of the application manager 270, the electronic device 101 may simply perform an operation of providing the user notification, an operation of copying at least one content, and an operation of pasting using the external electronic device 210 connected to the electronic device 101. The electronic device 101 may enhance a user experience by simply performing the operations.

FIG. 9 is an exemplary flowchart illustrating an operation of an electronic device according to an embodiment. At least one of operations of FIG. 9 may be performed by the electronic device 101 of FIG. 2 and/or the processor 120 of the electronic device 101 of FIG. 2.

Referring to FIG. 9, according to an embodiment, in operation 910, the processor may obtain information indicating a connection status between at least one external electronic device and the electronic device, established by communication circuitry, along a specified interval. For example, the processor may establish a connection with at least one external electronic device (e.g., the external electronic device 210 of FIG. 2) by using the communication circuitry 260 of FIG. 2. For example, the processor may establish a connection with at least one external electronic device by using the third application 283 of FIG. 2. For example, the processor may obtain the information by using the receiver 370 of FIG. 3. The processor may obtain the data 402 of FIG. 4 for updating the access information 271 of FIG. 2, by using the receiver 370 of FIG. 3. The processor may update the access information 271, based on a specified interval, by using the data 402 of FIG. 4.

Referring to FIG. 9, according to an embodiment, in operation 920, the processor may identify a specified input indicating to store at least one content displayed in the display based on the execution of the first application while obtaining the information, in a preset area of the memory accessible by the second application. The processor may display a screen (e.g., the screen 805 of FIG. 8A) based on the execution of the first application 281 of FIG. 2. The screen may include at least one content (e.g., the at least one content 801 of FIG. 8A). The processor may identify an input indicating to store the at least one content in a preset area (e.g., the temporary storage area 272 of FIG. 2) of memory (e.g., the memory 130 of the electronic device 101 of FIG. 2). For example, based on the execution of the clipboard manager 275 of FIG. 2, the processor may store data indicating at least one content in a specified range, in response to the input.

Referring to FIG. 9, according to an embodiment, in operation 930, the processor may check whether at least one external electronic device is identified, by using the obtained information, based on the input. The processor may identify status information (e.g., the status information 360 of FIG. 3) indicating a status of the at least one external electronic device, by monitoring the access information 271 of FIG. 2, based on the execution of the application manager 270 of FIG. 2. The processor may identify the at least one external electronic device by using the status information. For example, the processor may identify the at least one external electronic device, by using an application (e.g., the third application 283 of FIG. 2) and/or communication circuitry (e.g., the communication circuitry 260 of FIG. 2). The processor may identify the at least one external electronic device included within a specified range. However, it is not limited thereto.

Referring to FIG. 9, in a first status of identifying the at least one external electronic device (operation 930-YES), according to an embodiment, in operation 940, the processor may store data indicating at least one content in a preset area and display a first visual object indicating the first status in the display. For example, the first status may mean a status in which a connection between the electronic device and at least one external electronic device is established. The first status may mean a status indicating execution of an application (e.g., the third application 283 of FIG. 2) for establishing a connection with at least one external electronic device. The processor may display a first visual object (e.g., the first visual object 810 of FIG. 8A) in response to the input. The first visual object may include text for guiding that at least one content may be transmitted to an external electronic device.

Referring to FIG. 9, in a second status different from the first status (operation 930-NO), according to an embodiment, in operation 950, the processor may store data in the preset area and display the second visual object in the display, independently of displaying the first visual object. For example, the second status may include a status in which the processor fails to identify at least one external electronic device within a specified range. The second status may mean a status in which the connection established by the processor with the at least one external electronic device is disconnected. For example, the processor may obtain data indicating to identify at least one external electronic device, by using a receiver, based on a specified interval. The access information may be updated based on the obtained data. The processor may update the status information by monitoring the updated access information based on execution of the application manager 270 of FIG. 2. The processor may display, in the display, the first visual object or the second visual object, by using the toast information 330 of FIG. 3 corresponding to the status information. The processor may update a status indicating at least one external electronic device by using a listener, based on displaying the first visual object or the second visual object. For example, the processor may receive, from at least one external electronic device, a signal indicating an input indicating to display at least one content. The processor may transmit, to the at least one external electronic device, another signal including data indicating the at least one content, based on receiving the signal. However, it is not limited thereto.

According to an embodiment, an electronic device may be required to, in response to an input indicating to store at least one content displayed in a display in a status connected to an external electronic device, provide a user with a notification indicating the storing.

As described above, according to an embodiment, an electronic device may comprise communication circuitry 260, a display 250, memory 120, and a processor 120. The processor may be configured to obtain information indicating a status of a connection, established by the communication circuitry, between at least one external electronic device 210 and the electronic device, according to a specified interval. The processor may be configured to, based on executing a first application 281, identify a specified input indicating to store, in a preset area 272 of the memory accessible by a second application 282 different from the first application, at least one content 801 or 835 displayed within the display. The processor may be configured to, based on the input, in a first status where the at least one external electronic device is identified using the obtained information, store data indicating the at least one content in the preset area, and display, within the display, a first visual object 810 indicating the first status. The processor may be configured to, in a second status different from the first status, independently from displaying the visual object, store the data indicating the at least one content in the preset area, and display, within the display, a second visual object 815 different from the first visual object.

For example, the processor may be configured to transmit a signal for storing the data in a preset area accessible by an application executed by the at least one external electronic device.

For example, the processor may be configured to, in the first status, display, within the display, the first visual object guiding that the data is capable of being transmitted to the at least one external electronic device.

For example, the processor may be configured to, in the second status, in response to the input, display, within the display, the second visual object indicating the data being stored in the preset area.

For example, the processor may be configured to, in the second status, in response to a second input different from a first input that is the input, display, within the display, the at least one content, the second input indicating that the at least one content stored in the preset area is displayed by the second application.

For example, the processor may be configured to identify the at least one external electronic device, based on execution of a third application 283 different from the first application. The processor may be configured to store, in another area different from the preset area of the memory, the information according to the specified interval.

For example, the processor may be configured to, in the first status, update the information, based on displaying the first visual object.

For example, the second status may include a status where the connection is released. The processor may be configured to identify at least one of the first status or the second status, based on the specified interval. The processor may be configured to obtain other information indicating the at least one, based on identifying the at least one.

As described above, according to an embodiment, a method of an electronic device may comprise obtaining information indicating a status of a connection, established by communication circuitry 260, between at least one external electronic device 210 and the electronic device, according to a specified interval. The method may comprise, based on executing a first application 281, identifying a specified input indicating to store, in a preset area of memory 130 accessible by a second application 282 different from the first application, at least one content 801 or 835 displayed within a display 250. The method may comprise, based on the input, in a first status where the at least one external electronic device is identified using the obtained information, storing data indicating the at least one content in the preset area, and displaying, within the display, a first visual object 810 indicating the first status. The method may comprise, in a second status different from the first status, independently from displaying the visual object, storing the data indicating the at least one content in the preset area, and displaying, within the display, a second visual object 815 different from the first visual object.

For example, the method may comprise transmitting a signal for storing the data in a preset area accessible by an application executed by the at least one external electronic device.

For example, the method may comprise, in the first status, displaying, within the display, the first visual object guiding that the data is capable of being transmitted to the at least one external electronic device.

For example, the method may comprise, in the second status, in response to the input, displaying, within the display, the second visual object indicating the data being stored in the preset area.

For example, the method may comprise, in the second status, in response to a second input different from a first input that is the input, displaying, within the display, the at least one content, the second input indicating that the at least one content stored in the preset area is displayed by the second application.

For example, the method may comprise, identifying the at least one external electronic device, based on execution of a third application 283 different from the first application. The method may comprise storing, in another area different from the preset area of the memory, the information according to the specified interval.

For example, the method may comprise, in the first status, updating the information, based on displaying the first visual object.

For example, the method may comprise identifying at least one of the first status or the second status including a status where the connection is released, based on the specified interval. The method may comprise obtaining other information indicating the at least one, based on identifying the at least one.

As described above, according to an embodiment, a computer readable storage medium storing one or more programs, the one or more programs may, when executed by a processor 120 of an electronic device 101, obtain information indicating a status of a connection, established by communication circuitry 260, between at least one external electronic device 210 and the electronic device, according to a specified interval. The one or more programs may, based on executing a first application 281, identify a specified input indicating to store, in a preset area of memory 130 accessible by a second application 282 different from the first application, at least one content 801 or 835 displayed within a display 250. The one or more programs may, based on the input, in a first status where the at least one external electronic device is identified using the obtained information, store data indicating the at least one content in the preset area, and display, within the display, a first visual object 810 indicating the first status. The one or more programs may, in a second status different from the first status, independently from displaying the visual object, store the data indicating the at least one content in the preset area, and display, within the display, a second visual object 815 different from the first visual object.

For example, the one or more programs may, when executed by the processor of the electronic device, transmit a signal for storing the data in a preset area accessible by an application executed by the at least one external electronic device.

For example, the one or more programs may, when executed by the processor of the electronic device, in the first status, display, within the display, the first visual object guiding that the data is capable of being transmitted to the at least one external electronic device.

For example, the one or more programs may, when executed by the processor of the electronic device, in the second status, in response to the input, display, within the display, the second visual object indicating the data being stored in the preset area.

For example, the one or more programs may, when executed by the processor of the electronic device, in the second status, in response to a second input different from a first input that is the input, display, within the display, the at least one content, the second input indicating that the at least one content stored in the preset area is displayed by the second application.

For example, the one or more programs may, when executed by the processor of the electronic device, identify the at least one external electronic device, based on execution of a third application 283 different from the first application. The one or more programs may, store, in another area different from the preset area of the memory, the information according to the specified interval.

For example, the one or more programs may, when executed by the processor of the electronic device, in the first status, update the information, based on displaying the first visual object.

For example, the second status may include a status where the connection is released. The one or more programs may, when executed by the processor of the electronic device, identify at least one of the first status or the second status, based on the specified interval. The one or more programs may, obtain other information indicating the at least one, based on identifying the at least one.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device comprising:
communication circuitry (260),
a display (250),
memory (120), and
a processor (120) configured to:
obtain information (271) indicating a status of a connection, established by the communication circuitry, between at least one external electronic device (210) and the electronic device, according to a specified interval,
based on executing a first application (281), identify a specified input indicating to store, in a preset area (272) of the memory accessible by a second application (282) different from the first application, at least one content (801; 835) displayed within the display,
based on the input, in a first status where the at least one external electronic device is identified using the obtained information:
store data indicating the at least one content in the preset area, and
display, within the display, a first visual object (810) indicating the first status, and
in a second status different from the first status, independently from displaying the visual object:
store the data indicating the at least one content in the preset area, and
display, within the display, a second visual object (815) different from the first visual object.

2. The electronic device of claim 1, wherein the processor is configured to:
transmit a signal for storing the data in a preset area accessible by an application executed by the at least one external electronic device.

3. The electronic device of claim 1 or claim 2, wherein the processor is configured to:
in the first status, display, within the display, the first visual object guiding that the data is capable of being transmitted to the at least one external electronic device.

4. The electronic device of any one of claims 1 to 3, wherein the processor is configured to:
in the second status, in response to the input, display, within the display, the second visual object indicating the data being stored in the preset area.

5. The electronic device of any one of claims 1 to 4, wherein the processor is configured to:
in the second status, in response to a second input different from a first input that is the input, display, within the display, the at least one content, the second input indicating that the at least one content stored in the preset area is displayed by the second application.

6. The electronic device of any one of claims 1 to 5, wherein the processor is configured to:
identify the at least one external electronic device, based on execution of a third application (283) different from the first application, and
store, in another area different from the preset area of the memory, the information according to the specified interval.

7. The electronic device of any one of claims 1 to 6, wherein the processor is configured to:
in the first status, update the information, based on displaying the first visual object.

8. The electronic device of any one of claims 1 to 7,
wherein the second status includes a status where the connection is released, and
wherein the processor is configured to:
identify at least one of the first status or the second status, based on the specified interval, and
obtain other information indicating the at least one, based on identifying the at least one.

9. A method of an electronic device, comprising,
obtaining information indicating a status of a connection, established by communication circuitry (260), between at least one external electronic device (210) and the electronic device, according to a specified interval,
based on executing a first application (281), identifying a specified input indicating to store, in a preset area of memory (130) accessible by a second application (282) different from the first application, at least one content (801; 835) displayed within a display (250),
based on the input, in a first status where the at least one external electronic device is identified using the obtained information:
storing data indicating the at least one content in the preset area, and
displaying, within the display, a first visual object (810) indicating the first status, and
in a second status different from the first status, independently from displaying the visual object:
storing the data indicating the at least one content in the preset area, and
displaying, within the display, a second visual object (815) different from the first visual object.

10. The method of claim 9, comprising:
transmitting a signal for storing the data in a preset area accessible by an application executed by the at least one external electronic device.

11. The method of claim 9 or claim 10, comprising:
in the first status, displaying, within the display, the first visual object guiding that the data is capable of being transmitted to the at least one external electronic device.

12. The method of any one of claims 9 to 11, comprising:
in the second status, in response to the input, displaying, within the display, the second visual object indicating the data being stored in the preset area.

13. The method of any one of claims 9 to 12, comprising:
in the second status, in response to a second input different from a first input that is the input, displaying, within the display, the at least one content, the second input indicating that the at least one content stored in the preset area is displayed by the second application.

14. The method of any one of claims 9 to 13, comprising:
identifying the at least one external electronic device, based on execution of a third application (283) different from the first application, and
storing, in another area different from the preset area of the memory, the information according to the specified interval.

15. The method of any one of claims 9 to 14, comprising:
in the first status, updating the information, based on displaying the first visual object.
